# FASCICULE DE BREVET EUROPEEN

(11) **EP 2 072 243 B1**
(45) Date de publication et mention de la délivrance du brevet: **09.03.2016**
(21) Numéro de dépôt: 08170650.9
(22) Date de dépôt: 04.12.2008
(51) Int. Cl.: B32B 1/08, B32B 27/32, B32B 27/08, B32B 27/30, B32B 7/12, F16L 1/12

(54) **Tube multicouche en matière plastique pour adduction d'eau**
Mehrschichtiges Plastikrohr für die Wasserzuleitung
Multi-layer plastic tube for water conveyance

(30) Priorité: 19.12.2007 FR 0708873
(43) Date de publication de la demande: 24.06.2009
(73) Titulaire: Pipelife France SA, 27600 Gaillon (FR)
(72) Inventeur: Schnitzler, Jean-Luc, 78980, BREVAL (FR); Mestres, Philippe, 78290, CROISSY SUR SEINE (FR)
(74) Mandataire: Keschmann, Marc

(56) Documents cités:
- EP-A- 0 132 316
- EP-A- 0 742 097
- EP-A- 1 055 857
- WO-A-2007/060367
- DE-A1- 19 925 097
- US-A1- 2004 028 860
- US-A1- 2005 170 119
- DATABASE WPI Week 200375 Thomson Scientific, London, GB; AN 2003-789325 XP002487295 & CN 1 403 273 A (REN Z) 19 mars 2003 (2003-03-19) & DATABASE CA CHEMICAL ABSTRACTS SERVICE, COLUMBUS, OHIO, US; "Laminated multilayered plastic pipes" extrait de STN Database accession no. 142:177973

## Description

L'invention est relative à un tube multicouche en matière plastique pour adduction d'eau sous pression, en particulier d'eau chlorée, tube du genre de ceux qui comportent au moins trois couches, avec une couche externe en polyéthylène ayant une épaisseur suffisante pour assurer la tenue mécanique à la pression.

Le terme polyéthylène utilisé dans la description et les revendications englobe tous les types de polyéthylène convenant pour un tube d'adduction d'eau, en particulier polyéthylène moyenne (PEMD) et haute densité (PEHD), ou polyéthylène réticulé (PEX).

Le polyéthylène permet de réaliser des tubes d'adduction d'eau enroulables selon des diamètres relativement réduits, par exemple de l'ordre du mètre, ce qui facilite la mise en oeuvre de grandes longueurs. Bien que le polyéthylène donne satisfaction pour cette application, sa résistance est relativement faible à l'égard des agents oxydants, notamment au dioxyde de chlore, qui peuvent se trouver dans l'eau circulant dans le tube. Des études sont menées pour améliorer le comportement du tube vis à vis de tels agents oxydants.

Le document US 2004/0028860 souligne au paragraphe [0005] l'intérêt de prévoir pour des tubes d'adduction d'eau potable une couche intérieure formant barrière contre les agents oxydants qui peuvent réagir avec la couche extérieure notamment si elle est réalisée en polyéthylène réticulé PEX. Le paragraphe suivant [0006] indique que le chlorure de polyvinyle (PVC) ou le chlorure de polyvinyle chloré (CPVC) permet de réaliser des tubes immunisés contre la dégradation par les agents oxydants. Toutefois, les tubes en PVC ou CPVC ne sont pas enroulables selon des diamètres acceptables. Aussi des efforts ont été développés pour produire des tubes présentant les avantages à la fois du polyéthylène et du PVC, sans en présenter les inconvénients. Mais, comme indiqué à la fin du paragraphe [0006]. ni le PVC ni le CPVC ne peuvent être liés directement de manière satisfaisante à la surface d'une polyoléfine, notamment du polyéthylène, par exemple lors d'une co-extrusion. Des essais pour fournir une couche intermédiaire adhésive ont échoué.

Des recherches ont conduit à adopter pour la couche interne d'un tube multicouche un polymère fluoré comme enseigné par le document WO 2006/129 029.

DE 199 25 097 décrit un tube multicouche en matière plastique pour liquides, en particulier pour de l'eau, comportant au moins trois couches, avec une couche externe en polyéthylène ayant une épaisseur suffisante pour assurer la tenue mécanique à la pression, et une couche interne liée à la couche externe par une couche intermédiaire d'un liant. La couche interne est en PVDC (polyvinylidène) pour réduire la perméabilité à la vapeur d'eau et à l'oxygène. Une couche intermédiaire métallique peut être prévue. Il n'apparaît pas que le tube soit enroulable.

EP 1 055 857 concerne un tuyau souple à plusieurs couches, notamment pour le transport d'eau potable. La couche interne peut être réalisée en polyéthylène qui se trouve ainsi directement exposé aux agents oxydants se trouvant dans l'eau.

L'invention a pour but, surtout de fournir un tube multicouche en matière plastique du genre défini précédemment ayant une couche barrière interne pour protéger la couche externe, notamment contre les agents oxydants, qui est liée efficacement à la couche externe, ce tube devant être d'un prix de revient relativement bas. Il est souhaitable de plus que le tube multicouche soit enroulable, à la manière d'un tube entièrement en polyéthylène.

Selon l'invention, un tube multicouche en matière plastique pour adduction d'eau sous pression, tel que défini précédemment, est caractérisé en ce que :
- la couche interne est une couche barrière en PVC ou CPVC,
- le liant de la couche intermédiaire est formé par un copolymère d'éthylène à haute teneur en acétate de vinyle, ou une polyoléfine fonctionnelle,
- et l'épaisseur de la couche interne en PVC ou CPVC est suffisamment faible pour que le tube soit enroulable

De préférence, le tube est enroulable sur un diamètre moyen de l'ordre du mètre.

La teneur en acétate de vinyle du copolymère d'éthylène est de préférence comprise entre 18% et 42 % en poids, de préférence entre 20% et 35%, encore plus préférentiellement de 25% à 30%.

Avantageusement, on peut utiliser pour la couche intermédiaire de liant une résine EVATANE® commerciale de la société ARKEMA FRANCE, en particulier la résine EVATANE®28 05.

Dans la présente invention, on entend par polyoléfine fonctionnelle un terpolymère de l'éthylène et de deux monomères polaires insaturés choisis parmi :
- les (meth)acrylates d'alkyle en C₁-C₈, notamment le (meth) acrylate de méthyle, d'éthyle, de propyle, de butyle, de 2-éthylhexyle, d'isobutyle, de cyclohexyle ;
- les acides carboxyliques insaturés, leurs sels et leurs anhydrides, notamment l'acide acrylique, l'acide méthacrylique, l'anhydride maléique, l'anhydride itaconique, l'anhydride citraconique ;
- les époxydes insaturés, notamment les esters et éthers de glycidyle aliphatiques tels que l'allylglycidyléther, le vinylglycidyléther, le maléate et l'itaconate de glycidyle, l'acrylate et le méthacrylate de glycidyle, ainsi que les esters et éthers de glycidyle alicycliques ;
- les esters vinyliques d'acides carboxyliques saturés, notamment l'acétate de vinyle ou le propionate de vinyle.

Avantageusement, la couche intermédiaire de liant est formée par un terpolymère éthylène/acétate de vinyle/anhydride maléique. On ne sortirait pas du cadre de l'invention en utilisant des polymères greffés d'anhydride maléique (polyéthylène, polypropylène, polystyrène, etc.).

Avantageusement, la teneur en anhydride maléique dans le terpolymère est comprise entre 0,1% et 1%, plus particulièrement entre 0,15% et 0,7%.

Avantageusement la teneur en acétate de vinyle dans le terpolymère est comprise entre 8% et 30%, de préférence entre 15% et 27%.

Comme polyoléfines fonctionnelles, on peut utiliser les résines commerciales OREVAC® de la société ARKEMA FRANCE, en particulier la résine OREVAC®93 04.

L'épaisseur de la couche intermédiaire de liant peut être inférieure à 0.2 mm. L'épaisseur de la couche interne peut être inférieure à 1 mm.

Le tube multicouche en matière plastique pour adduction d'eau sous pression, en particulier d'eau chlorée, comportant au moins trois couches, avec une couche externe en polyéthylène ayant une épaisseur suffisante pour assurer la tenue mécanique à la pression, selon l'invention est également caractérisé en ce qu'il comporte une couche barrière interne en PVC ou CPVC qui est liée à la couche externe par une couche intermédiaire de liant, et en ce que la force de pelage de la couche interne est supérieure à 20 N/cm.

Le PVC ou CPVC peut être mélangé à du liant dans la couche intermédiaire et/ou dans la couche interne.

Le tube peut être obtenu par co-extrusion des trois couches.

L'invention consiste, mises à part les dispositions exposées ci-dessus, en un certain nombre d'autres dispositions dont il sera plus explicitement question ci-après à propos d'exemples de réalisation décrits avec référence au dessin annexé, mais qui ne sont nullement limitatifs. Sur ce dessin :
Fig. 1 est une section transversale d'un tube multicouche selon l'invention.
Fig. 2 est une vue en perspective d'une extrémité d'un tube selon l'invention, avec prélèvement d'un échantillon pour test de pelage, et
Fig. 3 est un schéma illustrant un test de pelage.

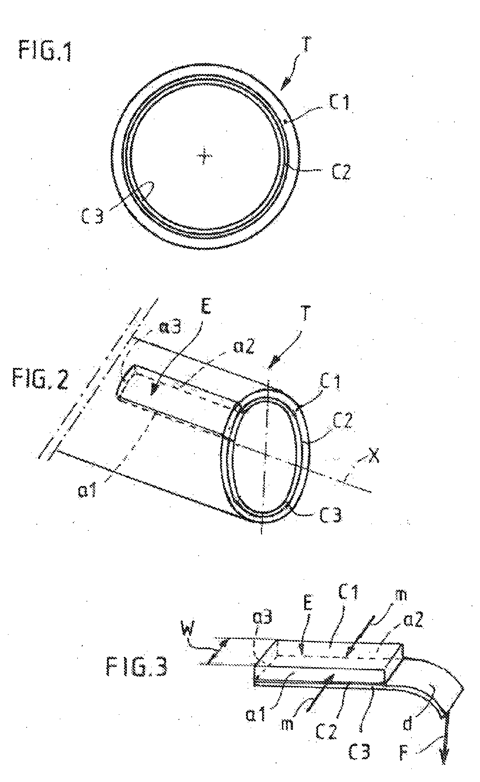

En se reportant à Fig. 1 on peut voir un tube T multicouche qui, dans l'exemple représenté, comporte trois couches de l'extérieur vers l'intérieur respectivement C1, C2, C3. Cet exemple n'est pas limitatif et le nombre de couches peut être supérieur à trois.

La couche externe C1 est en polyéthylène PE, notamment en polyéthylène moyenne PEMD ou haute densité PEHD, ou en polyéthylène réticulé PEX, ayant une épaisseur suffisante pour assurer la tenue mécanique à la pression interne de l'eau.

La couche interne C3 est une couche barrière en PVC ou CPVC résistant aux agents d'oxydation contenus dans l'eau, et protégeant la couche externe C1.

Pour assurer une bonne adhésion de cette couche interne malgré les difficultés soulignées dans l'état de la technique, selon l'invention, la couche intermédiaire C2 est une couche de liant formée par un copolymère d'éthylène à haute teneur en acétate de vinyle, notamment de 18 % à 42 % en poids, ou une polyoléfine fonctionnelle, notamment un terpolymère éthylène/acétate de vinyle/anhydride maléique.

L'épaisseur de la couche intermédiaire de liant C2 est inférieure à 0,2 mm, tandis que l'épaisseur de la couche interne C3 est inférieure à 1 mm, de sorte que le tube T conserve son caractère enroulable comme un tube monomatière en polyéthylène. Le caractère enroulable correspond à une capacité d'enroulement selon un diamètre moyen de l'ordre du mètre pour un tube dont la section a un diamètre extérieur qui ne dépasse pas 50 mm.

La structure multicouche, notamment tri-couche, du tube est obtenue par co-extrusion. Les composants des différentes couches peuvent se présenter sous forme de granulés ou de poudre pour la co-extrusion.

La couche intermédiaire C2 de liant est avantageusement formée par la résine EVATANE® 28 05 de la société ARKEMA FRANCE, comportant de 27% à 29% d'acétate de vinyle, ou une résine ayant une composition équivalente.

Selon une autre possibilité, la couche intermédiaire C2 est formée par la résine OREVAC® 93 04 de la société ARKEMA FRANCE, terpolymère EVA contenant au moins 1600 ppm d'anhydride maléique et de 23,5% à 26,5% d'acétate de vinyle, ou une résine ayant une composition équivalente.

De bons résultats, en termes d'adhésion entre les couches C3 et C1, ont été obtenus avec la combinaison suivante :
- couche C1 : PEMD 3802 BLACK épaisseur 2400 microns = 2.4 mm
- couche liant C2 : EVATANE ®28-05 épaisseur 100 microns = 0.1 mm
- couche interne C3 de PVC : réf. DORLYL RY 1068 X1 B150 épaisseur 500 microns = 0.5 mm.
La désignation DORLYL RY 1068 X1 B150 correspond à une référence de PVC.

De bons résultats ont aussi été obtenus avec la combinaison suivante :
- C1 : PEMD 3802 BLACK épaisseur 2400 microns = 2.4 mm
- C2 : OREVAC® 93 04 épaisseur 100 microns = 0.1 mm
- C3 : DORLYL RY 1068 X1 B150 épaisseur 500 microns = 0.5 mm

Le niveau d'adhésion de la couche interne C3 à la couche externe C1 est déterminé à l'aide d'un test décrit avec référence aux Fig. 2 et 3.

Après avoir réalisé par co-extrusion un tube T tri-couche, on découpe dans ce tube une éprouvette E sensiblement parallélépipédique comprise entre deux faces longitudinales a1, a2 planes, parallèles aux génératrices du tube T. Les plans des faces a1, a2 peuvent passer par l'axe géométrique X du tube T. La face arrière a3 est orthogonale aux génératrices du tube et est sectionnée pour permettre l'extraction de l'éprouvette E. L'extrémité avant de la couche C1 de l'éprouvette E est enlevée par découpe de manière à dégager, sous forme d'une languette d, l'extrémité avant de la couche C3 sur une longueur suffisante, de quelques centimètres. W désigne la largeur de l'éprouvette, dont l'épaisseur correspond à celle du tube.

Après avoir dégagé la languette d, on assure le maintien de la couche C1 par serrage à l'aide de mâchoires schématiquement représentées par des flèches m sur Fig. 3 agissant contre les faces a1 et a2. On exerce ensuite une force d'arrachement F sur la languette d, la force F étant orientée suivant une direction orthogonale au plan moyen de l'éprouvette, dans le sens de l'arrachement ou pelage, opposé à la couche C1. La force F provoquant le pelage est mesurée.

Un tube selon l'invention présente une force de pelage supérieure à 20 N/cm (Newton/centimètre).

Du PVC peut être mélangé avec la couche de liant C2 selon une proportion réduite, notamment égale ou inférieure à 5 % en poids. En variante, du liant peut être mélangé, en faible proportion, notamment de l'ordre de 5 % en poids, avec le PVC. Le liant additionné au PVC peut être différent de celui utilisé pour la couche C2.

Dans le cas d'un tube T ayant un diamètre extérieur de 32 mm, un résultat intéressant a été obtenu avec une couche de liant C2 en EVATANE® 28-05 et une couche C3 de PVC additionné de 5 % en poids de résine EVATANE® 33-45 comportant de 32% à 34% d'acétate de vinyle. La force de pelage a atteint 27 N/cm. Dans une réalisation avec une couche de liant C2 en résine OREVAC® 93 04, et une couche C3 en PVC, la force de pelage a atteint 28 N/cm.

Un tube tri-couche selon l'invention, de diamètre extérieur 32 mm, a pu être enroulé suivant un diamètre d'enroulement de 0,9 m sans que la couche interne C3 de PVC soit déformée de manière permanente. La couche de liant C2 est efficace pour éviter au PVC de "croquer", c'est-à-dire de s'affaisser sur lui-même.

Les tests de pression auxquels le tube multicouche est soumis ont lieu à 80°C. Ces tests sont franchis sans problème du fait que l'épaisseur de la couche C1 en polyéthylène permet de résister à la pression à la température de 80°C. A cette température, le PVC, contrairement au CPVC, ne contribue pas à la résistance mécanique, mais assure toujours la fonction de barrière aux agents oxydants et protège la couche externe C1 contre les oxydants dissous dans l'eau, notamment le dioxyde de chlore ClO₂.

Le PVC ou CPVC étant relativement peu coûteux, le tube multicouche selon l'invention reste d'un prix de revient acceptable.

## Revendications

1. Tube multicouche en matière plastique pour adduction d'eau sous pression, en particulier d'eau chlorée, comportant au moins trois couches, avec une couche externe (C1) en polyéthylène ayant une épaisseur suffisante pour assurer la tenue mécanique à la pression, et une couche interne (C3) liée à la couche externe (C1) par une couche intermédiaire (C2) d'un liant, **caractérisé en ce que** :
- la couche interne (C3) est une couche barrière en PVC ou CPVC,
- le liant de la couche intermédiaire (C2) est formé par un copolymère d'éthylène à haute teneur en acétate de vinyle, ou une polyoléfine fonctionnelle,
- et l'épaisseur de la couche interne (C3) en PVC ou CPVC est suffisamment faible pour que le tube soit enroulable.

2. Tube selon la revendication 1, **caractérisé en ce que** le tube est enroulable sur un diamètre moyen de l'ordre du mètre.

3. Tube selon la revendication 1 ou 2, **caractérisé en ce que** la teneur en acétate de vinyle du copolymère d'éthylène de la couche de liant (C2) est comprise entre 18% et 42 % en poids.

4. Tube selon l'une des revendications précédentes, **caractérisé en ce que** la teneur en acétate de vinyle du copolymère d'éthylène de la couche de liant (C2) est comprise entre 20% et 35 % en poids.

5. Tube selon la revendication 1, **caractérisé en ce que** la couche intermédiaire de liant est formée par un terpolymère éthylène/acétate de vinyle/anhydride maléique.

6. Tube selon la revendication 5, caractérisé en ce la teneur en anhydride maléique dans le terpolymère est comprise entre 0,1% et 1%, et la teneur en acétate de vinyle est comprise entre 8% et 30%.

7. Tube selon la revendication 5, caractérisé en que le terpolymère contient au moins 1600 ppm d'anhydride maléique et de 23,5% à 26,5% d'acétate de vinyle.

8. Tube selon l'une quelconque des revendications précédentes, **caractérisé en ce que** l'épaisseur de la couche intermédiaire de liant (C2) est inférieure à 0.2 mm.

9. Tube selon l'une quelconque des revendications précédentes, **caractérisé en ce que** l'épaisseur de la couche interne (C3) est inférieure à 1 mm.

10. Tube selon l'une quelconque des revendications précédentes, **caractérisé en ce que** la force de pelage de la couche interne (C3) est supérieure à 20 N/cm.

11. Tube selon l'une quelconque des revendications précédentes, caractérisé que du PVC ou CPVC est mélangé à du liant dans la couche intermédiaire (C2) et/ou dans la couche interne (C3).

12. Tube selon l'une quelconque des revendications précédentes, obtenu par co-extrusion des trois couches.

## Patentansprüche

1. Mehrschichtiges Rohr aus Kunststoff zur Zuleitung von Druckwasser, insbesondere chloriertem Wasser, das mindestens drei Schichten umfasst, mit einer äußeren Schicht (C1) aus Polyethylen mit einer Dicke, die dazu ausreicht, um die mechanische Festigkeit gegen Druck sicherzustellen, und einer inneren Schicht (C3), die mit der äußeren Schicht (C2) durch eine Zwischenschicht (C2) aus einem Bindemittel verbunden ist, **dadurch gekennzeichnet, dass**:
- die innere Schicht (C3) eine Barriereschicht aus PVC oder CPVC ist,
- das Bindemittel der Zwischenschicht (C2) von einem Ethylenco-polymer mit hohem Vinylacetatgehalt oder einem funktionellen Polyolefin gebildet wird,
- und die Dicke der inneren Schicht (C3) aus PVC oder CPVC ausreichend gering ist, so dass das Rohr aufgerollt werden kann.

2. Rohr nach Anspruch 1, **dadurch gekennzeichnet, dass** das Rohr zu einem durchschnittlichen Durchmesser in der Größenordnung von einem Meter aufgerollt werden kann.

3. Rohr nach Anspruch 1 oder 2, **dadurch gekennzeichnet, dass** der Vinylacetatgehalt des Ethylencopolymers der Bindemittelschicht (C2) zwischen 18 Gew.-% und 42 Gew.-% liegt.

4. Rohr nach einem der vorhergehenden Ansprüche, **dadurch gekennzeichnet, dass** der Vinylacetatgehalt des Ethylencopolymers der Bindemittelschicht (C2) zwischen 20 Gew.-% und 35 Gew.-% liegt.

5. Rohr nach Anspruch 1, **dadurch gekennzeichnet, dass** die Bindemittelzwischenschicht von einem Ethylen-Vinylacetat-Maleinsäureanhydrid-Terpolymer gebildet wird.

6. Rohr nach Anspruch 5, **dadurch gekennzeichnet, dass** der Maleinsäureanhydridgehalt in dem Terpolymer zwischen 0,1 % und 1 % liegt und der Vinylacetatgehalt zwischen 8 % und 30 % liegt.

7. Rohr nach Anspruch 5, **dadurch gekennzeichnet, dass** das Terpolymer mindestens 1600 ppm Maleinsäureanhydrid und 23,5 % bis 26,5 % Vinylacetat enthält.

8. Rohr nach einem der vorhergehenden Ansprüche, **dadurch gekennzeichnet, dass** die Dicke der Bindemittelzwischenschicht (C2) weniger als 0,2 mm beträgt.

9. Rohr nach einem der vorhergehenden Ansprüche, **dadurch gekennzeichnet, dass** die Dicke der inneren Schicht (C3) weniger als 1 mm beträgt.

10. Rohr nach einem der vorhergehenden Ansprüche, **dadurch gekennzeichnet, dass** die Schälkraft der inneren Schicht (C3) mehr als 20 N/cm beträgt.

11. Rohr nach einem der vorhergehenden Ansprüche, **dadurch gekennzeichnet, dass** das PVC oder CPVC mit dem Bindemittel in der Zwischenschicht (C2) und/oder in der inneren Schicht (C3) gemischt wird.

12. Rohr nach einem der vorhergehenden Ansprüche, das durch Koextrusion von drei Schichten erhalten wird.

## Claims

1. A plastic material multilayer pipe for pressurized water conveyance, in particular chlorinated water, comprising at least three layers, with a polyethylene outer layer (C1) having a thickness sufficient to achieve the mechanical resistance to pressure, and an inner layer (C3) bound to the outer layer (C1) by an intermediate layer (C2) of a binder, **characterised in that**:
- the inner layer (C3) is a PVC or CPVC barrier layer,
- the binder of the intermediate layer (C2) is formed by a high vinyl acetate content ethylene copolymer, or a functional polyolefin,
- and the thickness of the PVC or CPVC inner layer (C3) is low enough for the pipe to be windable.

2. The pipe according to claim 1, **characterised in that** the pipe is winnable on an average diameter in the order of one metre.

3. The pipe according to claim 1 or 2, **characterised in that** the vinyl acetate content of the ethylene copolymer of the binder layer (C2) is between 18% and 42% by weight.

4. The pipe according to one of the preceding claims, **characterised in that** the vinyl acetate content of the ethylene copolymer of the binder layer (C2) is between 20% and 35% by weight.

5. The pipe according to claim 1, **characterised in that** the binder intermediate layer is formed by an ethylene/vinyl acetate/maleic anhydride terpolymer.

6. The pipe according to claim 5, **characterised in that** the maleic anhydride content in the terpolymer is between 0.1% and 1%, and the vinyl acetate content is between 8% and 30%.

7. The pipe according to claim 5, **characterised in that** the terpolymer contains at least 1600ppm of maleic anhydride and 23.5% to 26.5% of vinyl acetate.

8. The pipe according to any of the preceding claims, **characterised in that** the thickness of the binder intermediate layer (C2) is lower than 0.2mm.

9. The pipe according to any of the preceding claims, **characterised in that** the thickness of the inner layer (C3) is lower than 1mm.

10. The pipe according to any of the preceding claims, **characterised in that** the peel force of the inner layer (C3) is greater than 20N/cm.

11. The pipe according to any of the preceding claims, **characterised in that** PVC or CPVC is mixed with a binder in the intermediate layer (C2) and/or in the inner layer (C3).

12. The pipe according to any of the preceding claims, obtained by co-extruding the three layers,
